## Europäisches Patentamt

## European Patent Office

## Office européen des brevets

(19)

(11) Veröffentlichungsnummer: **0 162 463**
**B1**

(12) **EUROPÄISCHE PATENTSCHRIFT**

(45) Veröffentlichungstag der Patentschrift:
**10.08.88**

(51) Int. Cl.⁴: **B 30 B 1/32,** B 30 B 15/30

(21) Anmeldenummer: **85106309.9**

(22) Anmeldetag: **22.05.85**

(54) **Presse zum Aufbringen einer Schicht auf eine Trägerplatte, insbesondere eine Scheibenbremsbelagträgerplatte.**

(30) Priorität: **22.05.84 DE 3419057**

(43) Veröffentlichungstag der Anmeldung:
**27.11.85 Patentblatt 85/48**

(45) Bekanntmachung des Hinweises auf die Patenterteilung:
**10.08.88 Patentblatt 88/32**

(84) Benannte Vertragsstaaten:
**BE FR GB IT SE**

(56) Entgegenhaltungen:
**CH-A-486 317**
**CH-A-517 588**

(73) Patentinhaber: **ING. JOHANN LEINWEBER Anstalt für Mechanik, Industriegelände Nord Johann-Giefing- Strasse 8-10, A-2700 Wr. Neustadt (AT)**

(72) Erfinder: **Holik, Karl, Moorgasse 15, A-2700 Wiener Neustadt (AT)**

(74) Vertreter: **Staeger, Sigurd, Dipl.- Ing., Patentanwälte Dipl.- Ing. S. Staeger Dipl.- Ing. Dipl.- Wirtsch.- Ing. R. Sperling Müllerstrasse 31, D-8000 München 5 (DE)**

## Beschreibung

Die Erfindung bezieht sich auf eine Presse zum Anpressen einer Schicht, insbesondere einer dünnen Zwischenschicht, aus pulverförmigem Material an eine Reibbelag-Trägerplatte, mit einem einen kraftschlüssigen Abschluß der oberen Öffnung eines Formraumes mittels der Trägerplatte bewirkenden Hauptkolben und einem von unten im Formraum bewegbaren Preßstempel, wobei das pulverförmige Material vor Abschluß des Formraumes in denselben einschüttbar ist.

Aus der DE-A1-3 240 764 ist eine Presse dieser Art bekannt; bei dieser Presse ist ein durch zwei Joche verbundenes Zugstangenpaar vorgesehen, auf welchem ein ein Kolbenaggregat aufnehmender Zylinderkörper verschiebbar gelagert ist und bei der das Kolbenaggregat aus einem ersten die Presse schließenden oder öffnenden Hauptkolben und einem zweiten gleichachsigen, in gleicher Richtung wirkenden, den Preßstempel tragenden, in der Matrize geführten Hauptkolben mit einer kleineren Querschnittsfläche sowie einem im letzteren verschiebenden Hilfskolben besteht. Eine derartige Presse eignet sich zwar zum Aufbringen von Bremsbelägen auf eine z. B. metallische Trägerplatte; eine gleichmäßige Verteilung des pulverförmigen Materials, welches zusammengepreßt wird, ist deshalb nicht möglich, weil nach dem Einbringen des Pulvers in den Preßraum weder eine seitliche Verteilung des eingebrachten Pulvers erfolgt noch ein Oberflächen-Abstrich; dies führt dazu, daß die Bremsbeläge gegebenenfalls mit einer geringfügig unterschiedlichen Dichte erstellt werden. Daher ist diese Presse auch nur für relativ dicke Schichten, also z. B. unmittelbar für Bremsbeläge, geeignet. Weil bei Belagkörpern, wie Bremsbelägen, beim Belegen o.dgl. Asbestmaterial vermieden werden soll, ist es notwendig, zwischen die Belagmasse, also in erster Linie den Bremsbelag und den z. B. metallischen Trägerkörper eine wärmeisolierende Zwischenschicht aufzubringen. Dies muß deshalb erfolgen, weil asbestfreie Massen einen sehr hohen Wärmedurchgang haben und somit beim Bremsen die Trägerplatte und die Bremsflüssigkeit stark erhitzt werden. Solche Zwischenschichten haben gewöhnlich nur eine Stärke von 1 - 2 mm. Auch ist es notwendig, die Zwischenschicht vom Reib- oder Bremsbelag materialmäßig zu trennen, wobei die Trennebene nur sehr geringe Toleranzen haben darf. Bei der Herstellung solcher dünnen Zwischenschichten wird meistens ein sehr schwer fließfähiges Material verwendet, so daß die gleichmäßige Verteilung in einer dünnen Schicht auf große Schwierigkeiten stößt.

Bisher hat man daher solche sehr dünnen Zwischenschichten manuell aufgebracht.

Aus der CH-A-486 317 ist eine Presse zum Verdichten von schüttbarem Material, also nicht zum Anpressen desselben auf eine Reibbelagträgerplatte, bekannt, bei der eine durch Zugstangen gehaltene, als Hohlkörper ausgebildete Kokille vorgesehen ist, in welcher durch Zusammenwirken von zwei gegenläufig bewegbaren Preßstempeln die Verdichtung vorgenommen wird. Bei dieser Presse ist eine genau dosierte Schüttgutaufgabe nicht möglich; auch ist das Abstoßen oder die Entnahme der Preßlinge kompliziert.

Der Erfindung liegt die Aufgabe zugrunde, für die Herstellung pulverförmiger Schichten, insbesondere sehr dünner Zwischenschichten und für die Aufbringung derselben auf eine Reibbelagträgerplatte genau dosierte und vollständig gleichmäßig verteilte Mengen der Presse zuzuführen.

Die Aufgabe wird dadurch gelöst, daß der Hauptkolben ein unten offener Hohlkolben mit einem Durchmesser seines Hohlraumes größer als dem Innendurchmesser des Formraumes ist, ein Füllschacht im Hohlraum des Hauptkolbens vorgesehen ist, letzterer für den Füllvorgang von einer über dem Formraum erhöhten Stellung auf die Oberfläche der letzteren enthaltenden Platte absenkbar ist und nahe der Unterkante im Hauptkolbenhohlraum ein drehbarer Verteiler/Abstreifer enthalten ist.

Durch das Zuführen des pulverförmigen Materials in den Formraum wird nicht nur gewährleistet, daß die Dosiermengen von oben in den Formraum fallen, sondern es wird durch den Verteiler/Abstreifer erreicht, daß die Form auch wirklich in allen Bereichen genau gefüllt ist. Um die Entnahme des fertigen Preßlings zu erleichtern, ist vorzugsweise eine die Trägerplatte unter sich haltende Druckübertragungsplatte in den Raum über der Formöffnung bewegbar und vom Hauptkolben auf die Formoberfläche anpreßbar.

Um eine bessere Verteilung des pulverförmigen Materials vor dem Einbringen in den Formraum zu erreichen, ist zweckmäßigerweise im Füllschacht mit einer Antreibstange verbunden ein Verdrängerkegel o.dgl. vorgesehen. Der Verteiler/Abstreifer o.dgl. kann im Querschnitt S-förmig ausgebildet sein und das Füllgut zur Mitte hin fördern.

Bevorzugterweise weist der Verteiler/Abstreifer Flügel auf, welche an der mittig durch den Hohlraum und den Füllschacht nach oben verlaufenden, drehantreibbaren Antreibsstange o.dgl. befestigt sind.

Auf der Zeichnung ist eine beispielsweise Ausführungsform der Erfindung stark schematisiert dargestellt; sie wird nachfolgend näher beschrieben. Es zeigt:

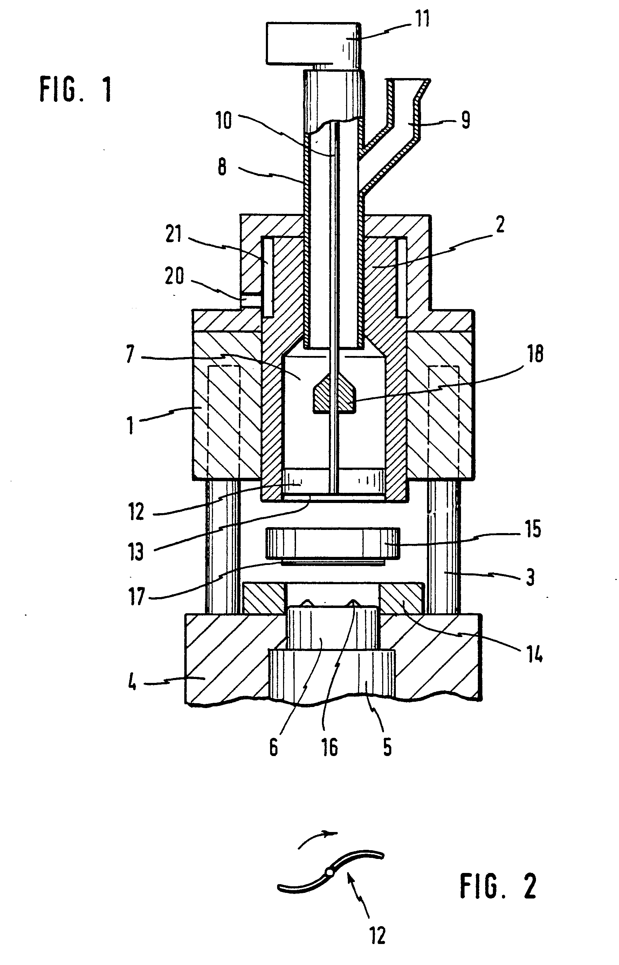

Fig. 1 einen Längsschnitt durch einen Teil der Presse und
Fig. 2 eine Draufsicht auf ein Detail.

Ein Rahmen 1 einer Presse nimmt den Oberteil derselben, also vornehmlich einen Hauptkolben 2 auf und ist über zwei Stangen 3 mit einem Unterteil 4 fest verbunden, in welchem ein Preßzylinder 5 mit einem Preßstempel 6 bewegbar gelagert ist.

In einer Ebene senkrecht zur Zeichenebene sind zwei nicht dargestellte Niederdruckzylinder vorgesehen, welche zur Betätigung des Hauptkolbens 2 mit Druck beaufschlagt werden können.

Der Hauptkolben 2 ist als Hohlkolben ausgebildet und im Oberteil 1 der Presse verschiebbar gelagert. Der untere Teil des Hauptkolbens weist einen als Füllschacht 7 ausgebildeten Hohlraum auf, während der obere Teil des Hauptkolbens auf einem Füllrohr 8 gleitbar gelagert ist. Dieses Füllrohr 8 weist einen Einfüllstutzen 9 auf, durch welchen pulverförmiges Material in dosierten Mengen aufgegeben wird. In der Mitte des Füllrohres ist eine drehbare Stange 10 gehalten, welche durch einen Elektromotor 11 in Drehung versetzt wird und an ihrem freien Ende einen Abstreifer 12 trägt. Dieser Abstreifer 12 weist, wie in Fig. 2 angedeutet, im Querschnitt die Form eines S auf. Die Unterkante 13 des Abstreifers 12 gleitet bei einer Drehung über eine mit dem Unterteil 4 verbundene Formplatte 14.

Die Formplatte 14 besteht bei der dargestellten Ausführungsform aus einem massiven Ring, der auf dem Unterteil 4 befestigt ist und gegebenenfalls ausgewechselt werden kann.

In den Raum zwischen den Hauptkolben 2 und der Formplatte 14 ist eine als Einleger ausgebildete Druckübertragungsplatte 15 hereinschwenkbar oder auf andere Weise hereinbewegbar. Diese Druckübertragungsplatte 15, die an ihrer Unterseite magnetisches Material oder auch Saugnäpfe aufweist, trägt eine Trägerplatte 17, auf welche die dünne Schicht aufgebracht werden soll.

Die Oberfläche des Preßstempels 6 ist mit Kalotten 16 versehen, die für eine gleichmäßige Druckverteilung auch dann sorgen, wenn z. B. die Trägerplatte 17 zur verbesserten Haftung der z. B. 1 mm dicken Zwischenschicht mit Öffnungen versehen ist.

Zum Füllen wird der Hohlkolben 2 durch die nicht dargestellten Druckzylinder auf die Formplatte abgesenkt; diese weist einen Formraum auf, welcher der Geometrie des zu verpressenden Teiles entspricht.

Gleichzeitig wird der im Formraum beweglich angeordnete Preßstempel 6 durch den unteren Preßzylinder 5 nach oben gefahren.

Ober den Füllstutzen 9 und das Füllrohr 8 wird eine vordosierte Menge des Füllmaterials in den Hohlraum 7 des Hohlkolbens 2 entleert, wobei ein auf der drehbaren Stange 10 angebrachter Verdrängerkegel 18 dafür sorgt, daß das pulverförmige Füllmaterial in die Randbereiche der Form kommt. Gleichzeitig wird der Preßstempel 6 auf die erforderliche Formtiefe abgesenkt. Der Verteiler 12 mit S-förmigem Querschnitt sorgt aufgrund der Drehung der Stange 10 durch den Elektromotor 11 dafür, daß während des Absenkens des Preßstempels 6 die Füllmasse gleichmäßig im Formraum der Formplatte 14 verteilt wird. Der Verteiler oder Abstreifer 12 unterstützt die Förderung der Füllmasse in Richtung auf die Mitte der Form hin; es entsteht somit eine Kraftrichtung zur Mitte hin, so daß die Füllmasse auch vollkommen den gewünschten Formraum ausfüllt, auch wenn diese Ausnehmung in der Formplatte 14 in einer oder in mehreren Richtungen kleiner ist als der Innendurchmesser des Hohlkolbens 2.

Sobald der Preßkolben 6 seine untere Endstellung erreicht hat, wird der Hohlkolben 2 durch die nicht dargestellten Druckzylinder hochgefahren. In der Zwischenzeit hat die Druckübertragungsplatte 15 z. B. eine metallische Trägerplatte 17 aus dem Vorratsstapel entnommen und in den Raum zwischen den beiden Kolben eingeschwenkt.

Die Druckübertragungsplatte 15 ist so ausgebildet, daß sie den Formraum und die Trägerplatte 17 vollständig überdeckt. Nach dem Einschwenken der Druckübertragungsplatte 15 wird über eine Leitung 20 Drucköl unter hohem Druck einem Ringraum 21 zugeleitet, wodurch der Hohlkolben die Druckübertragungsplatte 15 fest auf die Trägerplatte 17 und die Formplatte 14 preßt. Während die beiden nicht gezeigten Kolben nur unter einem niedrigen Druck arbeiten müssen, um die einzelnen Bewegungen des Hauptkolbens 2 durchführen zu können, ist eine Beaufschlagung mit Hochdruck für das Anpressen der Druckübertragungsplatte 15 an die genannten Teile erforderlich. Der Hohlkolben 2 bildet somit zusammen mit der Druckübertragungsplatte 15 das obere Preßjoch.

Der untere Preßkolben 6 kann nun nach oben gedrückt werden und verdichtet damit die im Formraum der Formplatte 14 gleichmäßig verteilt eingebrachte Füllmasse direkt auf die Trägerplatte 17. Durch das Flächenverhältnis der beiden Kolbenflächen des Hauptkolbens 2 im Zylinderraum 21 und der unteren Fläche des Preßkolbens 6 andererseits wird erreicht, daß im hydraulisch kurz geschlossenen Zustand beider Zylinder die Druckkraft des Hohlkolbens 2 auf die Druckübertragungsplatte 15 immer größer ist als die Preßkraft des Preßkolbens 6. Die Trägerplatte 17 z. B. für Bremsbeläge ist häufig mit nicht gezeigten Verankerungsbohrungen versehen, um ein einwandfreies Halten der Schicht bzw. Zwischenschicht zu gewährleisten.

Um beiden dünnen Zwischenschichten eine gleichmäßige Verdichtung auch im Bereich der Verankerungsbohrungen zu gewährleisten, sind die weiter oben erwähnten Erhebungen 16, z.B. in Kalottenform am Preßstempel 6 vorgesehen.

Nach Beendigung des Preßvorgangs wird der Druck aus dem Preßzylinder 6 entlastet und der Hauptkolben 2 wird nach oben bewegt.

## Patentansprüche

1. Presse zum Anpressen einer Schicht, insbesondere einer dünnen Zwischenschicht, aus pulverförmigem Material an eine Reibbelag-Trägerplatte, mit einem einen kraftschlüssigen Abschluß der oberen Öffnung eine Formraumes mittels der Trägerplatte bewirkenden Hauptkolben (2) einem von unten im Formraum bewegbaren Preßstempel (6), wobei das pulverförmige Material vor Abschluß des Formraumes in denselben einschüttbar ist, dadurch gekennzeichnet, daß der Hauptkolben (2) ein unten offener Hohlkolben mit einem Durchmesser seines Hohlraumes größer als dem Innendurchmesser des Formraumes ist, ein Füllschacht (7) im Hohlraum des Hauptkolbens (2) vorgesehen ist, letzterer für den Füllvorgang von einer über dem Formraum erhöhten Stellung auf die Oberfläche der letzteren enthaltenden Platte (14) absenkbar ist und nahe der Unterkante im Hauptkolbenhohlraum ein drehbarer Verteiler/Abstreifer (12, 13) enthalten ist.

2. Presse nach Anspruch 1, dadurch gekennzeichnet, daß eine die Trägerplatte unter sich haltende Druckübertragungsplatte (15) in den Raum über der Formöffnung bewegbar und vom Hauptkolben (2) auf die Formoberfläche anpreßbar ist.

3. Presse nach Anspruch 1 oder 2, dadurch gekennzeichnet, daß im Füllschacht (7) mit einer Antriebsstange (10) verbunden ein Verdrängerkegel (18) o.dgl. vorgesehen ist.

4. Presse nach einem der Ansprüche 1 bis 3, dadurch gekennzeichnet, daß der Verteiler/Abstreifer (12, 13) o.dgl. im Querschnitt S-förmig ausgebildet ist und das Füllgut zur Mitte hin fördert.

5. Presse nach einem der Ansprüche 1 bis 4, dadurch gekennzeichnet, daß der Verteiler/Abstreifer (12, 13) Flügel aufweist, welche an der mittig durch den Hohlraum und den Füllschacht (7) nach oben verlaufenden, drehantreibbaren Antriebsstange (10) o.dgl. befestigt sind.

**Claims**

1. Press for pressing a layer, in particular a thin intermediate layer, of pulverulent material onto a friction coating support plate, comprising a main piston (2) effecting a force-locking closure of the upper opening of a mould cavity by means of the support plate and a press ram (6) movable from below into the mould cavity, the pulverulent material being pourable into the mould cavity before closure of the latter, characterized in that the main piston (2) is a downwardly open hollow pistol having a diameter of its cavity greater than the internal diameter of the mould cavity, a filling well (7) is provided in the cavity of the main piston (2), that the latter for the filling operation is lowerable from an elevated position above the mould cavity onto the surface of the plate (14) containing the latter and near the lower edge a rotatable distributor/wiper (12, 13) is contained in the main piston cavity.

2. Press according to claim 1, characterized in that the support plate is movable with retaining pressure transfer plate (15) into the space above the mould opening and is adapted to be pressed by the main piston (2) onto the mould surface.

3. Press according to claim 1 or 2, characterized in that in the filling well (7) a displacement ball (18) or the like connected to a drive rod (10) is provided.

4. Press according to any one of claims 1 to 3, characterized in that the distributor/wiper (12, 13) or the like is made S-shaped in cross-section and conveys the filling material towards the centre.

5. Press according to any one of claims 1 to 4, characterized in that the distributor/wiper (12, 13) comprises vanes which are secured to the rotatably driven drive rod (10) or the like extending upwardly centrally through the cavity and the filling well (7).

**Revendications**

1. Presse pour appliquer par serrage sur un support à garniture d'adhérence une couche, en particulier une couche intermédiaire mince de matière pulvérulente, avec un piston principal (2) provoquant la fermeture par action de force de l'ouverture supérieure d'une cavité de moule au moyen du support, et avec un poinçon (6) pouvant se déplacer d'en bas dans la cavité de moule, la matière pulvérulente étant versée dans la cavité de moule avant la fermeture de celle-ci, caractérisée en ce que le piston principal (2) est un piston creux ouvert en bas dont le diamètre de sa cavité intérieure est plus grand que le diamètre intérieur de la cavité de moule, qu'il est prévu une gaine de remplissage (7) dans la cavité du piston creux (2), ledit piston pouvant s'abaisser pour le remplissage depuis une position haute au-dessus de la cavité de moule sur la plaque de moule (14) le contenant, et qu'un élément distributeur/éjecteur (12, 13) est disposé dans la cavité du piston principal.

2. Presse selon la revendication 1, caractérisée en ce qu'une plaque de transmission de pression (15) tenant sous elle le support peut se déplacer dans l'espace se trouvant au-dessus de l'ouverture du moule et peut être serrée par le piston principal (2) sur la surface de moule.

3. Presse selon la revendication 1 ou 2, caractérisée en ce qu'il est prévu dans la gaine de remplissage (7) un cône déplaceur (18) ou élément analogue relié à une tige de commande (10).

4. Presse selon une quelconque des revendications 1 à 3, caractérisée en ce que l'élément distributeur/éjecteur (12, 13) ou analogue a une section transversale en S et refoule la matière de remplissage vers le centre.

5. Presse selon une quelconque des revendications 1 à 4, caractérisée en ce que l'élément distributeur/éjecteur (12, 13) possède des ailettes qui sont fixées à la tige de commande (10) ou élément analogue pouvant être entraînée en rotation qui s'étend vers le haut au centre de la cavité et de la gaine de remplissage (7).

FIG. 1

FIG. 2